# EUROPEAN PATENT APPLICATION

(11) **EP 4 545 542 A1**
(43) Date of publication of application: **30.04.2025**
(21) Application number: 23205758.8
(22) Date of filing: 25.10.2023
(51) Int. Cl.: C07F 15/02, H01M 8/00

(54) **TRANSITION METAL CLUSTER COMPOUNDS FOR ELECTROCHEMICAL APPLICATIONS**

(71) Applicant: Litricity GmbH, 83026 Rosenheim (DE)
(72) Inventor: Stimming, Ulrich, 83080 Oberaudorf (DE); Guilherme Machado de Carvalho, João, 80336 München (DE); Hess Frieling, Kristopher Manuel, 81369 München (DE)
(74) Representative: Sonnenhauser, Thomas Martin

(57) **Abstract**

The present invention refers to novel cluster compounds particularly suitable for electrochemical applications as well the synthesis and use thereof in redox flow batteries, photocatalysis and medical applications. The cluster compounds of the present invention comprise an ion and a plurality of counterions and provide high charge densities in aqueous electrolytes by wherein the ligand of the ion comprises a substituted or unsubstituted linear hydrocarbon chain having three or more carbon atoms linearly bound between at least two of the two or more carboxy groups; a substituted or unsubstituted linear hydrocarbon chain having two carbon atoms between at least two of the two or more carboxy groups and wherein the hydrocarbon chain comprises one or more of an amino group, a further carboxy group, and a sulfate group; or a lactone comprising two or more hydroxy groups.

## Description

The present invention relates to novel cluster compounds comprising one or more types of transition metals for use in electrochemical applications, particularly for use in aqueous redox flow batteries.

### Technical background

Using renewable energies such as solar and wind requires an energy management that contains energy storage capabilities. Redox flow batteries (RFBs) are an option that can be used in decentralized as well as in centralized systems. RFBs are the only type of battery in which the energy content and the power output can be scaled independently, offering a high flexibility for applications such as load levelling and frequency stabilization.

The current technology, the all-vanadium RFB, has clear advantages but suffers from distinct problems, the low energy density (about 20 times lower than Li-ion batteries) and low specific power density which requires high surface area felt electrodes to mitigate this problem. Complex compounds, such as cluster compounds, with multiple redox centers (for higher energy density) and high rates of electron transfer (for high power density) could provide an alternative approach to this established system. These complex compounds necessitate, however, profound chemical tailoring and redesign of electrolyte compositions.

Redox flow batteries have thus emerged as a compelling solution for large-scale energy storage applications. These systems are particularly well-suited for grid-level energy storage, renewable energy integration, and applications demanding long-duration energy storage capabilities. At their core, RFBs operate based on reversible electrochemical reactions involving redox-active species, which are dissolved in separate electrolyte solutions (catholyte and anolyte). These redox reactions facilitate the storage and release of electrical energy, making RFBs a versatile and attractive technology for various energy storage needs.

Conventional redox flow batteries predominantly employ organic molecules or metal complexes as redox-active species. These materials are carefully selected based on their redox properties, solubility, and stability within the electrolyte solutions. While significant advancements have been made in RFB technology, several challenges continue to hinder their broader adoption and optimization.

One key challenge is the limited availability of redox-active materials that can meet the stringent requirements of RFBs. Current systems often suffer from issues such as low energy density, rapid capacity fade, and difficulties in scaling up to meet the needs of grid-scale applications. In particular, the energy density of conventional RFBs is often constrained by the molecular size and mass transport limitations of the redox-active species, impeding their ability to store substantial energy efficiently.

Moreover, the long-term stability of redox-active materials under the harsh electrochemical conditions experienced in RFBs remains a concern, as degradation of these materials can lead to decreased performance and shortened cycle life.

The incorporation of cluster compounds could be considered as a solution to insufficient energy density due to the plurality of charges that can be carried by such compounds.

While cluster compounds can exhibit remarkable energy density, as they contain multiple redox-active centers within a single molecule, there are drawbacks associated with such compounds that preclude industrial applicability of said compounds. Specifically, due to poor solubility of such compounds, correlates directly with lowered energy density of electrolytes comprising such compounds as charge carriers.

CN 115275292 A discloses an aqueous organic flow battery based on a vanadium-based organic cluster molecule aqueous solution, and belongs to the field of organic flow batteries, the aqueous organic flow battery based on the vanadium-based organic cluster molecule aqueous solution is characterized in that vanadyl sulfate is used as a raw material, and organic cluster molecules containing vanadium atoms are synthesized through a hydrothermal reaction; the molecular weight of the vanadium-based organic cluster molecule is 2876, the potential is 1.0 V, and the vanadium-based organic cluster molecule can be used as a positive electrode material of an aqueous flow battery; a phosphotungstic acid cluster molecule with the potential of 0.2 V is selected as a negative electrode material, and the molecular weight of the phosphotungstic acid cluster molecule is 2880; the solubility of the two cluster molecules in a sulfuric acid aqueous solution is high, the two cluster molecules can be respectively prepared into redox electrolytes of a positive electrode and a negative electrode, the cross contamination problem of the electrolytes of the positive electrode and the negative electrode can be effectively solved by utilizing the size exclusion effect, and meanwhile, the overall device cost of the flow battery is greatly reduced.

US 2014/0370405 (A1) discloses a non-aqueous redox flow battery comprising a negative electrode immersed in a non-aqueous liquid negative electrolyte, a positive electrode immersed in a non-aqueous liquid positive electrolyte, and a cation-permeable separator (e.g., a porous membrane, film, sheet, or panel) between the negative electrolyte from the positive electrolyte, wherein during charging and discharging, the electrolytes are circulated over their respective electrodes, wherein the electrolytes each comprise an electrolyte salt (e.g., a lithium or sodium salt), a transition-metal free redox reactant, and optionally an electrochemically stable organic solvent, wherein each redox reactant is selected from an organic compound comprising a conjugated unsaturated moiety, a boron cluster compound, and a combination thereof, wherein the organic redox reactant of the positive electrolyte comprises a tetrafluorohydroquinone ether compound or a tetrafluorocatechol ether compound.

The article "Organic Functionalization of Polyoxovanadate-alkoxide Clusters: Improving the Solubility of Multimetallic Charge Carriers for Nonaqueous Redox Flow Batteries" by VanGelder et al. (published in ChemSusChem, 2018) discloses the development of multimetallic charge carriers, with the report of high yielding syntheses of etherfunctionalized polyoxovanadate-alkoxide clusters, [V₆O₇(OR)₉-(OCH₂)₃CR'], R = CH₃, C₂H₅; R' = CH₃, CH2OCH3, CH₂OC₂H₄OCH, wherein these clusters exhibit four redox events, spanning nearly a two-volt window, and demonstrate rapid electron-transfer kinetics, wherein the ethoxide derivatives are able to reversibly cycle two electrons at each electrode in symmetric charging schematics, demonstrating long-term solution stability, wherein ether-functionalization yields a twelve-fold increase in solubility, a factor which directly dictates the energy density of a redox flow battery.

### Summary of the invention

The inventors have realized the need for an improved cluster compounds, wherein, in particular, the energy density of electrolytes comprising said compounds is increased and the increased charge carrier properties of multi-charged clusters can be fully utilized.

In one aspect according to the present disclosure, there is provided a cluster compound comprising
an ion, and
a plurality of counterions,
the ion comprising metal atoms M and one or more types of ligands, wherein
   each of the metal atoms M is independently selected from the group consisting of Mn, Fe, Co, Cr, V, Cu, Ni, and Zn,
the ligand comprises two or more carboxyl groups; characterized in that
   A) the ligand comprises a substituted or unsubstituted linear hydrocarbon chain having three or more carbon atoms linearly bound between at least two of the two or more carboxy groups; or
   B) the ligand comprises a substituted or unsubstituted linear hydrocarbon chain having two carbon atoms between at least two of the two or more carboxy groups and wherein the hydrocarbon chain comprises one or more of an amino group, a further carboxy group, and a sulfate group.

In a further aspect according to the present disclosure there is provided an electrolyte solution comprising a cluster compound as defined in the claims or a salt thereof in a concentration ranging from 0.01 to 5 M, preferred ranging from 0.1 to 2 M, further preferred from 0.5 to 1.5 M.

In a further aspect according to the present disclosure there is provided the use of the cluster compound as defined in the claims or of the electrolyte solution as defined in the claims in a redox flow battery, photocatalysis or medical applications.

In a further aspect according to the present disclosure there is provided a redox flow battery comprising the cluster compound as defined in the claims or the electrolyte solution as defined in the claims.

### Brief description of the drawings

Figure 1 shows two FTIR spectra of the cluster M₂N₁₈[Fe₂₈(µ₃-O)₈(tart)₁₆(OAc)₂₄] ×H₂O (M, N = Li, Na, K).
Figure 2 shows FTIR spectra of the cluster M₂₀[Fe₂₈(µ₃-O)₈(tart)₁₆(OAc)₂₄] ×H₂O (M, N = Ba, Ca, Na).
Figure 3 and 4 show cyclic voltammograms (CVs) Of Ba₁₀Fe₂₈ (Figure 3) and Fe₂₈ (Figure 4) (supporting electrolyte 0.3 M Na₂SO₄, pH = 5.5, scan rate = 100 mV/s).
Figure 5 shows FTIR spectra of citric acid (in grey) and Fezs-Citric (in black).
Figure 6 shows PXRD pattern of Fe₂₈-Citric (in black, bottom) and citric acid (in grey, top).
Figure 7 shows FTIR spectra of ascorbic acid (in black) and Fe₂₈-Ascorb (in grey).
Figure 8 shows PXRD pattern of Fe₂₈-Ascorb (in black, bottom) and ascorbic acid (in grey, top).
Figure 9 shows FTIR spectra of sodium gluconate (in grey) and Fe₂₈-Gluco (in black).
Figure 10 shows PXRD pattern of Fezs-Gluco (in black, bottom) and sodium gluconate (in grey, top).
Figure 11 shows PXRD pattern of different Fezs clusters with acid linkers compared to Li₂K₂₀Fe₂₈.

### Detailed description of the invention

Surprisingly, the present inventors found that cluster compounds comprising an ion which comprises metal atoms M and one or more types of ligands, wherein the ligand comprises a substituted or unsubstituted linear hydrocarbon chain having three or more carbon atoms linearly bound between at least two of the two or more carboxy groups; or the ligand comprises a substituted or unsubstituted linear hydrocarbon chain having two carbon atoms between at least two of the two or more carboxy groups and wherein the hydrocarbon chain comprises one or more of an amino group, a further carboxy group, and a sulfonate group, as defined in the claims, can surprisingly provide electrolyte solutions having significantly increased solubility and thus increased viscosity while providing high energy density. Examples 1 to 8 show the physical and electrochemical properties of the cluster compounds of the present invention when provided as charge carriers in electrolyte solutions.

The term "cluster compound" as used herein refers to a substance having the components as defined in the claims. The substance can comprise a plurality of atoms, ions, complexes, molecules etc. The components of the substance can be geometrically arranged and coordinated via one or more of electrostatic interactions, covalent bonds, coordination H-bridging bonds etc. That is, cluster compound can refer to an ensemble of bound atoms intermediate in size between a molecule and a bulk solid. Clusters usually include a variety of stabilizing ligands in addition to the "naked" cluster core, which is an ion as defined in the claims. Cluster compound can thus refer to a molecule or compound that consists of a group of atoms, typically metal atoms, bonded together in a discrete and well-defined cluster. These clusters can be composed of a few to several dozen atoms and exhibit unique structural, electronic, and chemical properties. Cluster compounds thus include cluster complexes, metal cluster, molecular cluster, metalloid cluster, polyhedral cluster.

A cluster compound as used herein can thus be a molecular entity composed of multiple atoms, usually metal atoms, bonded together in a specific arrangement, exhibiting distinctive properties and reactivity compared to individual atoms or simple compounds. These clusters can adopt three-dimensional structures with well-defined bonding patterns.

A cluster compound thus refers to a structure formed by the coordination of metal atoms that can be arranged as one or more (polyhedral, optionally heptahedral, i.e. of seven metal atoms/ions) core, optional with further metal atoms of the same or a different type and/or the same or a different charge as the atoms of the core, optionally arranged in a ring-structure around the periphery of the core, and ligands of formula (I) which are coordinating the metal atoms (of core and/or periphery). The resulting structure can contain several metal centers connected by bridging ligands.

The term "complex" as used herein refers to a compound that is formed by one or more metal atoms (preferably ions) which is/are coordinated by one or more surrounding (charged or uncharged) ligands. Ligands are molecules or ions that donate pairs of electrons to the central metal, resulting in the formation of coordinate covalent bonds (with the one or more metal atoms and optionally with other ligands). The ligands can furthermore interact via van der Waals or electrostatic (ionic) forces with a surrounding media. The complex can be uncharged or charged, i.e. in the form of an ion.

The term "ion" as used herein refers to a particle (atom, molecule, complex) that carries an electric charge due to the gain or loss of electrons. The term "ions" can include cations which are positively charged ions formed by electron loss, as well as anions, which are negatively charged ions formed by electron gain. Ions can carry a single charge or a plurality or charges. The charge of an ion can vary depending in the chemical, electrochemical and electronic environment. The charge can be localized (centered) at the charged ion or can be delocalized from the ion to further atoms or ions in proximity and/or interaction with the charged ion.

The term "counterion" as used herein similarly refers to a particle (atom, molecule, complex) that carries an electric charge due to the gain or loss of electrons. The term "counterion" can include cations which are positively charged ions formed by electron loss, as well as anions, which are negatively charged ions formed by electron gain. Counterions can carry a single charge or a plurality or charges. The charge of an ion can vary depending in the chemical, electrochemical and electronic environment. The charge can be localized (centered) at the charged counterion or can be delocalized from the ion to further atoms or ions in proximity and/or interaction with the charged counterion. The counterions according to the present disclosure carry a charge (or at least a partial charge) that is opposite to the charge of the ion. That is, if the ion is positively charged, the counterion carries at least a partial negative charge, preferred the counterions are negatively charged.

The term "plurality" as used herein refers to a number of at least greater than 1, such as 2 to 200, 2 to 100, 2 to 80, 2 to 70, 2 to 60, 2 to 50, 2 to 42, 2 to 36, 2 to 32, 2 to 30, 2 to 28.

The term "ligand" as used herein refers to a molecule or ion or a mixtures of molecules or ions that can bind to a central metal atom or ion to form a coordination complex. The concept of ligands is fundamental to coordination chemistry, and it plays a crucial role in various chemical and biological processes. Ligands can vary widely in structure and size, and they can donate one or more pairs of electrons to the metal center to form coordinate covalent bonds. This binding of ligands to metal ions or atoms results in the formation of complex compounds with distinct chemical and physical properties. A "ligand" is thus a molecular entity, which can include molecules or ions, that possesses the ability to bind to a central metal atom or ion through the donation of one or more pairs of electrons.

Ligands according to the present disclosure are defined in the claims and include but are not limited to citric acid, mucic acid, ascorbic acid acid, ethylenediaminetetraacetate (EDTA), 1,2,3,4-butanetetracarboxylic acid, nitrilotriacetic acid (NTA), isophthalic acid, terephthalic acid, tricarballylic acid, maleic acid, phthalic acid, 1,2-cyclohexanedicarboxylic acid, glutaric acid, adipic acid, suberic acid, azelaic acid, sebacic acid, 1,2,3-propanetricarboxylic acid, 1,2,4-benzenetricarboxylic acid, trimesic acid, trimesic acid (1,3,5-Benzenetricarboxylic acid), 1,2,4,5-benzenetetracarboxylic acid, ethylenebis(dithiocarbamate), 2,2'-bipyridine-4,4'-dicarboxylic acid, naphthalene-1,5-disulfonic acid, trans-1,2-diaminocyclohexane-N,N,N',N'-tetraacetic acid (CDTA), as well as anions of any of the preceding compounds. During the synthesis of the compounds as defined in the claims, in particular of cluster compounds comprising citric acid, mucic acid and ascorbic acid, indications have been found that the compounds provide good solubility and thus electrolytes having increased charge density can be realized without undesirable increase in viscosity.

The terms "substituted" and "unsubstituted" as used herein are essential in organic chemistry to describe the structural modifications of organic molecules and to specify the exact chemical structure of a compound. The terms "substituted" and "unsubstituted" are used to describe the presence or absence of additional atoms, groups, or molecules on a chemical compound, typically on a carbon atom in an organic molecule. "Substituted" as used herein refers to a chemical compound when one or more hydrogen atoms attached to the carbon atoms in the molecule have been replaced or substituted by other atoms, groups, or molecules. These other atoms, groups or molecules include but are not limited to, isomers, halogens, chalcogens, amine groups, hydroxy groups, sulfate groups, ether groups, ester groups. The term "unsubstituted" thus defines that in a molecule all the hydrogen atoms attached to the carbon atoms remain unchanged. In other words, no additional atoms, groups, or molecules have replaced the hydrogen atoms in the molecule. Unsubstituted compounds are typically the simplest form of a particular chemical structure and comprise, preferably consist of hydrogen and carbon atoms.

In some embodiments, the substituted or unsubstituted linear hydrocarbon chain has the general formula YOOC-[CR'₂]ₙ-COOY or YOOC-CR"₂-[CR'₂]ₘ-CR"₂-COOY, wherein n is 3 or more, m is 1 or more, R' is independently selected from the group consisting of H, OH, NH₂, COOY, SO₃Y, alkyl, alkene, an ether group, and an ester group, preferred H, OH, and COOY, R" is independently selected from the group consisting of H, OH, NH₂, COOY, SO₃Y, alkyl, alkene, an ether group, and an ester group, preferred H, OH, and COOY, Y is a charge, preferred a negative charge, or hydrogen.

Alkyls include methyl, ethyl, propyl, isopropyl, butyl, tert-butyl, pentyl, hexyl, heptyl, octyl etc. The term "alkyl" as used herein refers to saturated or unsaturated straight chain/linear or branched hydrocarbon substituents, examples of the alkyl groups include methyl, ethyl, propyl, butyl, pentyl, hexyl, octyl, decyl, isopropyl, sec-butyl, isobutyl, tert-butyl, isopentyl, vinyl, allyl, 1-butenyl, 2-butenyl, isobutenyl, and pentenyl.

The term "alkene" as used herein refers to saturated or unsaturated straight chain/linear or branched hydrocarbon substituents having at least one double bond.

In some embodiments, the substituted or unsubstituted linear hydrocarbon chain has a general formula selected from the group consisting of YOOC-[CH₂]ₙ-COOY, YOOC-[COH₂]ₙ-COOY, YOOC-[CHOH]ₙ-COOY, YOOC-[CHNH₂]ₙ-COOY, YOOC-[CH₂]ₙ₋₁[CHNH₂]₁-COOY, and YOOC-[CH₂]ₙ₋₁-[CHCOOH]-COOY.

In some embodiments, the ligand is a lactone comprising two or more hydroxy groups. The term lactone as used herein refers to substituted or unsubstituted cyclic carboxylic esters, preferably C5 to C7 (optionally C6) cyclic carboxylic esters (i.e. sugar acids), containing a 1-oxacycloalkan-2-one structure (-C(=O)-O-), or analogues having unsaturation or heteroatoms replacing one or more carbon atoms of the ring. The optional substituents are preferably hydroxy groups. In some embodiments, the lactone ring forms a α-lactone = 3-membered ring, a β-lactone = 4-membered, a γ-lactone = 5-membered, a δ-lactone = 6-membered. In preferred embodiments, the lactone is a 5-membered lactone. In some embodiments, the ring comprises one or more double bonds. In some embodiments, the lactone is a furan-based lactone. In some embodiments, the lactone comprises 2 hydroxy groups, in some embodiments, the lactone comprises 3 hydroxy groups, in some embodiments, the lactone comprises 4 hydroxy groups, in some embodiments, the lactone comprises 5 hydroxy groups. In preferred embodiments, the lactone comprises 3 hydroxy groups. The lactone is optionally ascorbic acid or derivatives thereof.

In some embodiments, each of the metal atoms M is Mn, Fe or a mixture thereof. While all transition metals can be suitable to be employed in the cluster compound according to the present invention, each of the metal atoms M is independently selected from the group consisting of Mn, Fe, Co, Cr, V, Cu, Ni, and Zn as defined in the claims. In preferred embodiments, each of the metal atoms M is Mn, Fe or a mixture thereof. Mn, Fe as well as mixtures thereof provide the cluster compound with high charge density due to the multiple charges that can be carried by the metal atoms/respective cations. Redox states of the Fe that can be realized within the cluster compound according to the present invention thus include Fe, Fe²⁺, Fe³⁺, as well as intermediary Fe⁴⁺, Fe⁵⁺, Fe⁶⁺. Redox states of the Mn that can be realized within the cluster compound according to the present invention thus include Mn, Mn ²⁺, Mn ³⁺, as well as Mn⁴⁺, Mn⁵⁺, Mn⁶⁺, Mn⁷⁺.

In some embodiments, the cluster compound is comprising 12 to 42 metal atoms M, 16 to 36 metal atoms M, 24 to 32 metal atoms M, 26 to 30 metal atoms M, or 28 metal atoms M. Clusters according to the present invention can exhibit a wide range of structures, and the specific structures depending on the types of metal atoms, their arrangement, and the conditions under which they are formed. Structures that can be formed thus include but are not limited to polyhedral structures including cuboctahedral cluster (particularly, with 12 metal atoms): This cluster consists of a central metal atom or ion surrounded by eight metal atoms at the corners of a cube and three additional metal atoms on the faces of the cube. It forms a structure resembling a cuboctahedron. Icosahedral cluster (particularly with 13 to 42 metal atoms): icosahedral clusters are spherical-like structures that can contain varying numbers of metal atoms. The most well-known icosahedral cluster is the 13-atom one, often formed by transition metals according to the present disclosure. Dodecahedral cluster (particularly with 20 metal atoms): dodecahedral clusters consist of 20 metal atoms or ions arranged in a structure resembling a dodecahedron. Octahedral cluster (particularly with 24 metal atoms): octahedral clusters feature a central metal atom or ion surrounded by six metal atoms, arranged in the shape of an octahedron. Cuboctahedral cluster (32 metal atoms): this larger cuboctahedral cluster can extend the 12-atom structure by adding additional layers of metal atoms or ions in a cuboctahedral arrangement. Cuboctahedral cluster (particularly with 42 metal atoms): a further extension of the cuboctahedral structure to include 42 metal atoms or ions, with additional layers and increased complexity.

The specific structure and arrangement of metal atoms in these clusters can vary based on factors such as the type of metal, the conditions of formation (e.g., temperature and pressure), and the ligands or other molecules present. These clusters are a subject of active research in the field of cluster chemistry, and they can have unique properties and applications in catalysis, materials science, and nanotechnology.

In some embodiments, the two or more carboxyl groups are terminal carboxyl groups.

In some embodiments, the ligand consists of a substituted or unsubstituted linear hydrocarbon chain between at least two of the two or more carboxy groups, or wherein the ligand consists of a substituted or unsubstituted branched hydrocarbon chain between at least two of the two or more carboxy groups.

In some embodiments, the substituted or unsubstituted linear hydrocarbon chain comprises from 3 to 24, from 3 to 18, from 3 to 12, from 3 to 8, from 3 to 6, or 3 carbon atoms, or the linear hydrocarbon chain comprises from 2 to 24, from 2 to 18, from 2 to 12, from 2 to 8, from 2 to 6, or 2 carbon atoms.

In some embodiments, the one or more types of ligands are independently selected from the group consisting of citric acid, mucic acid, ascorbic acid, and anions thereof. Citric acid is a weak, triprotic organic acid (meaning it has three acidic hydrogen ions) that can serve as a ligand in coordination chemistry. As a ligand, citric acid can form coordination complexes with metal atoms and/or ions by donating one or more of its oxygen atoms to the metal center. These oxygen atoms typically come from carboxylate groups present in the citric acid molecule.

Advantages of citric acid (C₆H₈O₇) as a ligand within the present disclosure include: Chelating properties: Citric acid has multiple carboxylic acid groups (COOH), which can act as chelating sites. Chelation involves the formation of stable, water-soluble complexes with metal ions. Citric acid's ability to chelate metal ions makes it useful in metal detoxification, as well as in cleaning and food preservation. Buffering Capacity: Citric acid is often used as a buffer in chemical processes. Its three acidic protons provide buffering capacity, helping to maintain a stable pH level in a solution, which is valuable in various experimental and industrial processes, such as in redox applications, including redox flow batteries. Complexation and stabilization: Citric acid can coordinate with metal ions in solution to form stable complexes, which can be used to stabilize certain reactions or control the solubility and bioavailability of certain metal salts. Eco-Friendly: Citric acid is biodegradable and environmentally friendly, making it a preferred choice in green and sustainable chemistry practices, such as redox flow batteries.

Mucic acid (also known as galactaric acid), is a hexahydroxydicarboxylic acid with the molecular formula. It can act as a ligand in coordination chemistry by donating oxygen atoms from its carboxylate groups to form coordinate covalent bonds with metal ions. Mucic acid is particularly interesting as a ligand because of its ability to form stable complexes with various metal atoms and/or ions.

Advantages of mucic acid thus include: Chelation: Mucic acid has multiple carboxylate groups (COO-) that can serve as chelating sites. This property enables it to form strong, stable complexes with metal ions, a characteristic that can be advantageous in various applications. Biocompatibility: Mucic acid is a natural compound that can be derived from sources such as galactose, a monosaccharide found in various fruits and vegetables. Its biocompatibility makes it suitable for applications in the pharmaceutical and food industries, where safety and low toxicity are essential. Metal complexation and stabilization: Mucic acid can form metal complexes that are stable under various conditions and thus particularly suitable for redox flow batteries. Environmental sensitivity: Mucic acid's biodegradability and low environmental impact make it an eco-friendly option in green chemistry practices and in applications where environmental considerations are important. Medicinal and pharmaceutical applications: Mucic acid and its metal complexes have been studied for their potential pharmaceutical applications, including drug delivery systems and cancer treatment. Its ability to chelate metals can be harnessed for therapeutic purposes.

Ascorbic acid is an organic compound represented by formula C₆H₆O₆. It is a white solid, but impure samples can appear yellowish. It dissolves well in water to give mildly acidic solutions. Ascorbic acid exists as two enantiomers, commonly denoted "l" (for "levo") and "d" (for "dextro"). The I isomer is the one most often encountered: it occurs naturally in many foods, and is one form ("vitamer") of vitamin C, an essential nutrient for humans and many animals. Ascorbic acid is a furan-based lactone of 2-ketogluconic acid. It contains an adjacent enediol adjacent to the carbonyl. This -C(OH)=C(OH)-C(=O)- structural pattern is characteristic of reductones, and increases the acidity of one of the enol hydroxyl groups. The deprotonated conjugate base is the ascorbate anion, which is stabilized by electron delocalization that results from resonance between two forms: 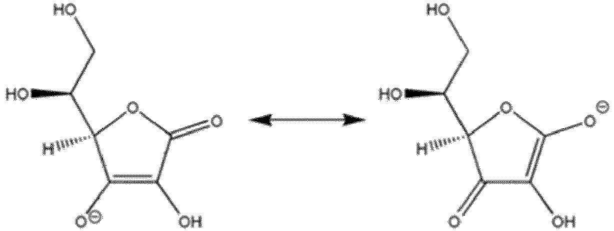 For this reason, ascorbic acid is much more acidic than would be expected if the compound contained only isolated hydroxyl groups.

In some embodiments, the cluster compound, optionally the ion of the cluster compound, can be in the form of a cluster and comprises four sub-units, wherein each of the sub-units comprises preferred 7 metal atoms M, preferred in the form of a poly-oxometallate, optionally wherein the molecules are coordinated to three or four metal atoms M. Polyoxymetallate refers to a class of inorganic compounds composed of metal ions, including metals atoms according to the present invention, connected by oxygen atoms in the form of oxo (O²⁻) and hydroxo (OH⁻) groups.

In some embodiments, the ligand has a tetradentate coordination to three of the metal atoms M, or wherein the ligand has a hexadentate coordination to four of the metal atoms M derived from two different sub-units.

In some embodiments, the ion is a polyanion, preferred having the general formula M₈₋₃₀(µ₃-O)₂₋₁₂(A)₅₋₂₈(CH₃COO)₅₋₃₀^{y-}, further preferred M₂₈(µ₃-O)₈(A)₁₆(CH₃COO)₂₄]²⁰⁻, wherein M is metal atom M, A is an organic acid or anion selected from citric acid, mucic acid, and ascorbic acid, and combinations thereof, wherein y is from 6 to 32and/or wherein the cluster compound has the general formula M₃₋₂₈[Fe₈₋₃₀(µ₃-O)₂₋₁₂(A)₅₋₂₈(CH₃COO)₅₋₃₀] • xH₂O, wherein x is from 6 to 32. In further embodiments, the cluster compound has the general formula M₂N₁₈[Fe₂₈(µ₃-O)₈(tart)₁₆(OAc)₂₄] ×H₂O (M, N = Li, Na, K). In further embodiments, the cluster compound has the general formula M₂₀[Fe₂₈(µ₃-O)₈(tart)₁₆(OAc)₂₄] ×H₂O (M, N = Ba, Ca, Na).

In some embodiments, the cluster compound is further comprising an oligosaccharide, preferred further comprising a cyclic oligosaccharide, further comprising preferred cyclodextrin. Cyclic oligosaccharides, such as cyclodextrins, have several advantages in redox applications, making them valuable in various chemical and analytical processes. Advantages of using cyclic oligosaccharides include that they can form inclusion complexes with a wide range of guest molecules, including organic and inorganic compounds involved in redox reactions. This encapsulation can enhance the stability of reactive species and protect them from undesired side reactions. They can further encapsulate reactive intermediates and radicals generated during redox reactions, stabilizing them and preventing their premature reactivity or degradation. They can further provide enhanced solubility: cyclic oligosaccharides are water-soluble and can improve the solubility of poorly water-soluble redox-active compounds. This increased solubility can aid in the design of more efficient redox processes and in the formulation of redox-active materials. Cyclic oligosaccharides can furthermore reduce aggregation: cyclic oligosaccharide can prevent the aggregation of redox-active molecules in solution, which is crucial for achieving consistent and reliable redox reactions.

In a further aspect according to the present disclosure, there is provided an electrolyte solution comprising a cluster compound as defined in any one of claims 1 to 14 or a salt thereof in a concentration ranging from 0.01 to 5 M, preferred ranging from 0.1 to 2 M, further preferred from 0.5 to 1.5 M. Electrolyte solutions play a crucial role in redox flow batteries. Redox flow batteries use two separate electrolyte solutions to store electrical energy and release it when needed.

Redox flow batteries consist of two (identical, similar or different) electrolyte solutions, each containing electroactive species dissolved in a solvent. The two solutions are typically referred to as the positive and negative electrolytes (posolyte and negolyte). Common electroactive species according to the prior art include metal ions (e.g., vanadium, iron) or organic molecules (e.g., quinones). The cluster compound according to the present invention allow for increased the charge density due to the multiple charges that can be carried (as well as swiftly added and removed) by the compounds as defined in the claims. The operation of redox flow batteries relies on the movement of ions between the positive and negative electrolytes. When the battery is charged, electrons are used to reduce the electroactive species in the positive electrolyte while simultaneously oxidizing those in the negative electrolyte. During discharge, the reverse process occurs. The compounds as defined in the claims allow for a swift charging and discharging, while carrying multiple charges and thus increasing the charge density.

The choice of solvent in the electrolyte can be crucial. It should be chemically stable, non-flammable, and have good ionic conductivity. Water is can be used according to the present invention, while organic solvents like acetonitrile or propylene carbonate are used in certain organic flow battery chemistries and can be added to some extend to the aqueous solution (up to 5% by weight).

The choice of electroactive species and their concentration in the electrolyte significantly influences the energy density (total energy storage capacity) and power density (rate of energy delivery) of the battery. Higher concentrations can lead to higher energy density but might affect the battery's efficiency and stability. By providing an electrolyte comprising the cluster compound as defined in the claims, the concentration of the charge carrier can be significantly increased as compared to the prior art while avoiding increasing viscosity.

The operating temperature of redox flow batteries can affect the performance of the electrolytes. Some systems operate at elevated temperatures to improve electrolyte kinetics and overall efficiency. The cluster compounds according to the present invention have good temperature stability and can thus be used in a plurality of application without electrolyte degradation.

In some embodiments, the solution has a pH value ranging from 2 to 10, preferred ranging from 3 to 8, further preferred ranging from 4 to 6.

In some embodiments, the solution has a viscosity of from 1 mPa/s to 2 mPa/s, preferred of from 1.6 mPa/s to 1.9 mPa/s, measured at 25 °C using Ostwald viscometer.

In a further aspect according to the present disclosure, there is provided the use of the cluster compound as defined in the claims or of the electrolyte solution as defined in the claims in a redox flow battery, photocatalysis or medical applications. Medical applications according to the present invention refer to the cluster compound (or electrolyte) as defined in the claims for use in the treatment and/or diagnosis of specific diseases. The present invention thus refers to the use of the cluster compounds as well as the electrolyte comprising the cluster compound in redox flow applications (e.g. battery), and in photocatalysis. The present invention thus also refers to the cluster compound and/or electrolyte comprising the cluster compound for use in the treatment and/or diagnosis of specific diseases. The medical application according to the present invention thus can include targeted disinfection by employing the cluster compounds, the delivery and release of active agents/drugs (i.e. acting as nanocarriers).

Cluster compounds, particularly those containing transition metals as defined in the claims, have found applications in the field of photocatalysis and medical applications due to their unique properties and reactivity. Medical applications can involve using light-activated catalysts to trigger chemical reactions for various medical applications, such as disinfection, drug delivery, and diagnostic assays.

Cluster compounds can serve as efficient photocatalysts, initiating chemical reactions when exposed to light. They absorb light energy and promote electron transfer, creating reactive species that can participate in various photochemical processes.

Medical applications using cluster compounds can be applied in disinfection and antimicrobial processes. For instance, metal cluster compounds, like silver clusters or semiconductor nanoclusters, can be used as photocatalysts to generate reactive oxygen species (ROS) such as hydroxyl radicals (•OH) under light irradiation. These ROS possess strong antibacterial properties and can be used for sterilization of medical equipment or surfaces in healthcare settings.

Cluster compounds can be incorporated into drug delivery systems for controlled release of therapeutic agents. By modifying the surface properties of clusters, researchers can attach drugs or therapeutic molecules. When exposed to a trigger such as light or pH change, the photocatalytic activity of the cluster can be harnessed to release the drug in a controlled and targeted manner. This is particularly useful for precision medicine and cancer treatment.

Cluster compounds have been explored in (photodynamic) therapy, a medical treatment that can utilize light-activated substances to destroy malignant cells. Certain cluster compounds, when exposed to a trigger such as light, can generate singlet oxygen (¹O₂), a highly reactive species that damages cancer cells. This approach minimizes collateral damage to surrounding healthy tissues and is a promising avenue for cancer treatment.

Cluster compounds can be used in diagnostic assays based on the detection of light-induced changes in properties. For instance, they can serve as probes or labels in assays, such as fluorescence or luminescence-based tests for the detection of bi-omarkers or pathogens. The binding or reaction of cluster compounds with specific target molecules can be monitored through changes in their spectroscopic properties when exposed to light.

Nanoscale cluster compounds can be used to create photoactive nanoparticles. These nanoparticles can be designed to target specific tissues or cells. When activated by light, they can generate reactive species, facilitating drug release or therapeutic actions with high precision.

The controlled and targeted nature of medically applied cluster compounds using cluster compounds as defined in the claims can lead to reduced side effects and improved patient outcomes. By directing therapeutic action only where it is needed, cluster-based photocatalysis minimizes collateral damage to healthy tissues and reduces the risk of adverse reactions.

The cluster compounds can be used for photocatalytic applications. Photocatalysis is a process that uses light energy to initiate chemical reactions. Cluster compounds, according to the present invention, can be used as photocatalysts in a variety of applications. Including water splitting for hydrogen production: Cluster compounds, particularly metal-oxide clusters, can serve as photocatalysts for the splitting of water into hydrogen and oxygen. This is a key reaction for renewable hydrogen production, which can be used as a clean fuel source. Air and water purification: Photocatalytic cluster compounds, can be used to degrade and remove organic pollutants and pathogens from air and water when exposed to UV or visible light. They can help in wastewater treatment and air purification processes. Carbon dioxide reduction: Some cluster compounds can catalyze the reduction of carbon dioxide into useful chemical feedstocks or fuels like methane, methanol, or formic acid. Synthetic chemistry: Cluster compounds can be used as photocatalysts in synthetic chemistry to facilitate specific reactions. They can initiate reactions that are challenging under standard conditions, expanding the toolbox of synthetic chemists. Self-Cleaning surfaces: Certain cluster compounds can be coated onto surfaces, such as glass or tiles, to create self-cleaning materials. When exposed to light, these surfaces can break down and remove organic contaminants, reducing the need for manual cleaning.

In a further aspect according to the present disclosure, there is provided a redox flow battery comprising the cluster compound as defined in the claims and/or the electrolyte as defined in the claims. Redox flow batteries according to the present invention can comprise one or more redox battery unit cell which comprise a first electrode, a second electrode spaced apart from the first electrode, and a membrane arranged between the first and the second electrode, wherein the first electrode optionally comprises a first flow field, and wherein the cluster compound or the electrolyte as defined in the claims is used for charge storage/transfer.

In this aspect, the redox battery unit cell comprises a first electrode, a second electrode which is spaced apart from the first electrode and a membrane arranged between the first and the second electrode. The term "electrode" as used herein generally refers to a physical object (such as a solid or fluid) capable of taking an electric current to or from a source of power. That is, the term "electrode" as used herein can refer to an electron-providing or electron-removing, i.e. an electron-conducting solid but also to an electron-conducting fluid. The redox battery unit cell as defined in claim 1 can thus be characterized in that the first electrode and the second electrode both comprise solid structures. The redox battery unit cell as defined in claim 1 can thus alternatively be characterized in that the first electrode comprises a solid structure and wherein the second electrode comprises a fluid, such as a gas (preferred comprising air and/or oxygen) in contact with a second solid (e.g. metal) electrode. That is, if the second electrode comprises for example oxygen, the oxygen can participate in an electrochemical reaction with protons provided via the membrane and electrons provided via the charge collector to the second solid electrode in a two-electron process producing water. Optionally, the second electrode consists of a fluid, such as a gas, preferred of air and a second solid electrode in contact with the fluid. That is, the electrons provided from the first electrode during discharging can react with a fluid or a gas at the second electrode.

The second electrode is spaced apart from the first electrode such that short-circuit faults and tunneling current are avoided. That is, the second electrode is not in direct contact with the first electrode but spatially separated from the first electrode. The first and second electrode can be spatially separated for example by a distance (inner electrode distance) of greater than 1 mm. For example, the inner electrode distance can be in the range from 1 mm to 1 cm, or from 2 mm to 100 mm, or from 4 mm to 50 mm. Preferably, the inner electrode distance is from 10 to 25 mm.

The first and second electrode are separated such that short-circuit faults and tunneling current are avoided. In addition to the spatial separation, the first and second electrode are furthermore separated by a membrane, which is arranged between the first and the second electrode. The membrane acts as (electronical) separator of the first and second electrode. The membrane allows transport of ionic charge carriers that are needed to close the circuit during the charging/discharging of the battery.

In some examples, the cell provides a current density ranging from 0.1 A/cm² to 10 A/cm², preferred ranging from 0.1 A/cm² to 5 A/cm², further preferred ranging from 0.5 A/cm² to 2 A/cm², depending on the type and amount/concentration of cluster compound employed in the redox flow battery.

### Figure description

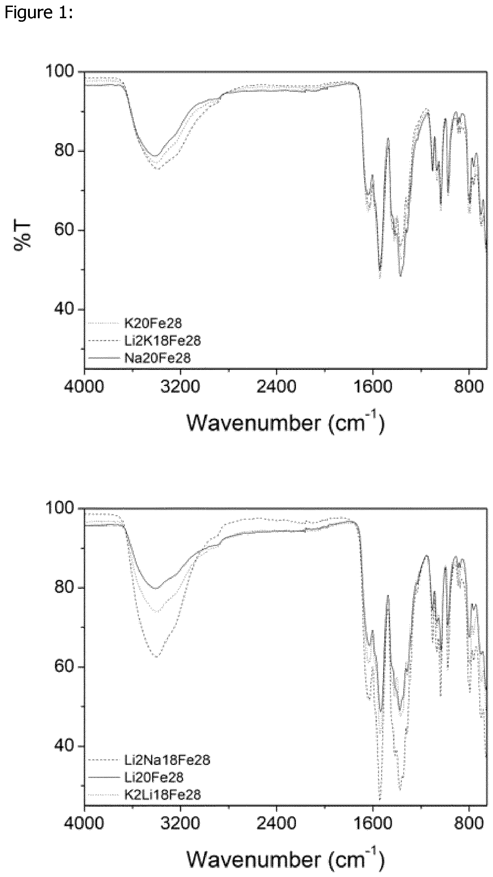

Figure 1 shows FTIR spectra of the cluster M₂N₁₈[Fe₂₈(µ₃-O)₈(tart)₁₆(OAc)₂₄] ×H₂O (M, N = Li, Na, K). FTIR was thus employed to confirm the identities of the products. One can identify the bands corresponding to the C=O stretch at 1653 cm⁻¹ in the FTIR spectra. Other significant bands are the stretching of O-H at 3440 cm⁻¹ and the Fe-O stretch from 650 to 700 cm⁻¹ (Fig 1). All spectra of the cluster synthesized are identical and match the values of corresponding structural feature reported in the literature.

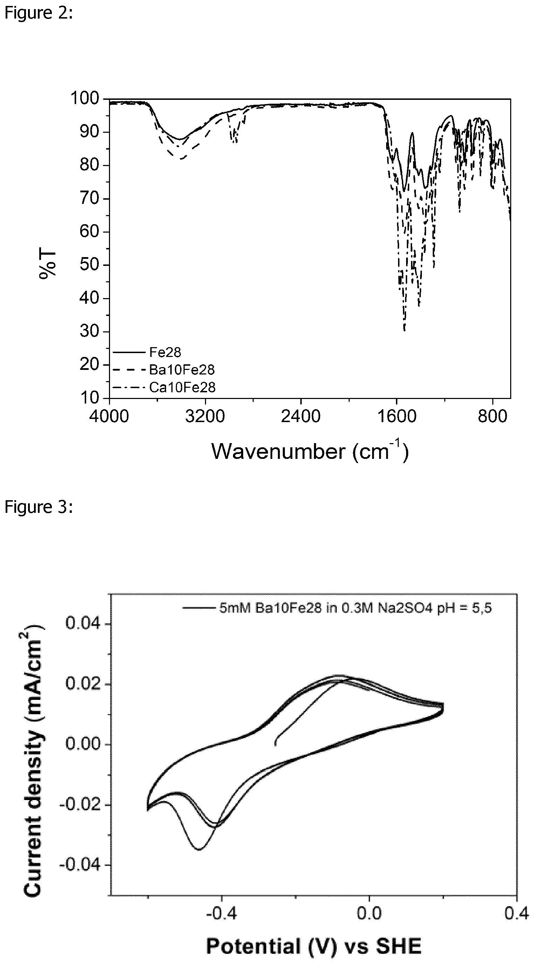

Figure 2 shows FTIR spectra of the cluster M₂₀[Fe₂₈(µ₃-O)₈(tart)₁₆(OAc)₂₄] ×H₂O (M, N = Ba, Ca, Na). FTIR was thus employed to confirm the identities of the products. One can identify the bands corresponding to the C=O stretch at 1653 cm⁻¹ in the FTIR spectra. Other significant bands are the stretching of O-H at 3440 cm⁻¹ and the Fe-O stretch from 650 to 700 cm⁻¹ (Fig 2). All spectra of the cluster synthesized are identical and match the values of corresponding structural feature reported in the literature.

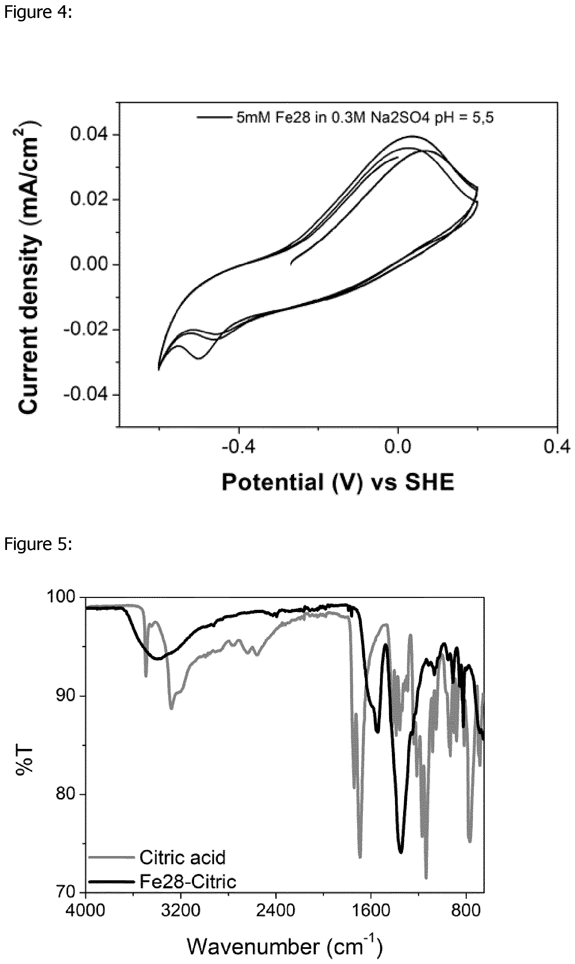

Figures 3 and 4 show cyclic voltammograms (CVs) Of Ba₁₀Fe₂₈ (Figure 3) and Fe₂₈ (Figure 4) (supporting electrolyte 0.3 M Na₂SO₄, pH = 5.5, scan rate = 100 mV/s). To further characterize the electrochemical behaviour of Ba₁₀Fe₂₈, cyclic voltammetry was probed and compared to the previously reported Fe₂₈ cluster (Fig 3). The electrochemical behaviour is similar to the previously reported Fe₂₈ ferric wheel.

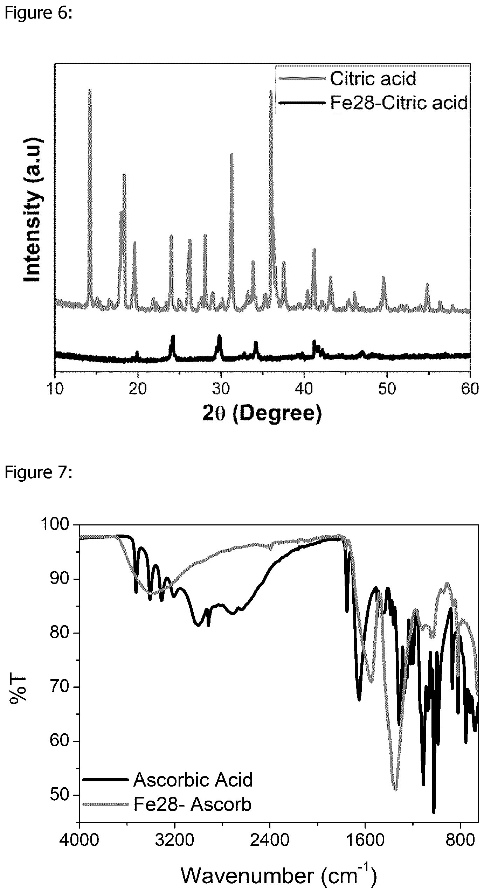

Figure 5 shows FTIR spectra of citric acid (in grey) and Fe₂₈-Citric (in black). Figure 6 shows PXRD pattern of Fe₂₈-Citric (in black, bottom) and citric acid (in grey, top). FTIR and PXRD were thus employed to confirm the identity of the product. In the FTIR spectra, one can identify the bands corresponding to the C=O stretch at 1600 cm⁻¹ (Fig. 5) The asymmetric vibration of the carboxylate (COO⁻) can be identified by comparing the citric acid's COOH functional group, which is on a higher wave number (1750 cm⁻¹). The band of the C-O stretching of the tertiary alcohol is visible at 1100 cm⁻¹ for Fe₂₈-Citric and 1200 cm⁻¹ for citric acid. Other significant bands are the stretching of O-H at 3300 cm⁻¹ and the Fe-O stretch from 650 to 700 cm⁻¹ (Fig. 5).

Figure 7 shows FTIR spectra of ascorbic acid (in black) and Fe₂₈-Ascorb (in grey). In the FTIR spectra, one can identify the bands corresponding to the C-C double bond at 1660 cm⁻¹ and the corresponding enol-hydroxy at 1290 cm⁻¹ (Fig 6). A significant shift can be observed from the C=O stretching band compared to the free ligand (1720 cm ¹), indicating the coordination of the carboxylate with the metal centre. Other significant bands are the stretching of O-H at 3400 cm⁻¹ and the Fe-O stretch from 650 to 700 cm⁻¹ (Fig. 7).

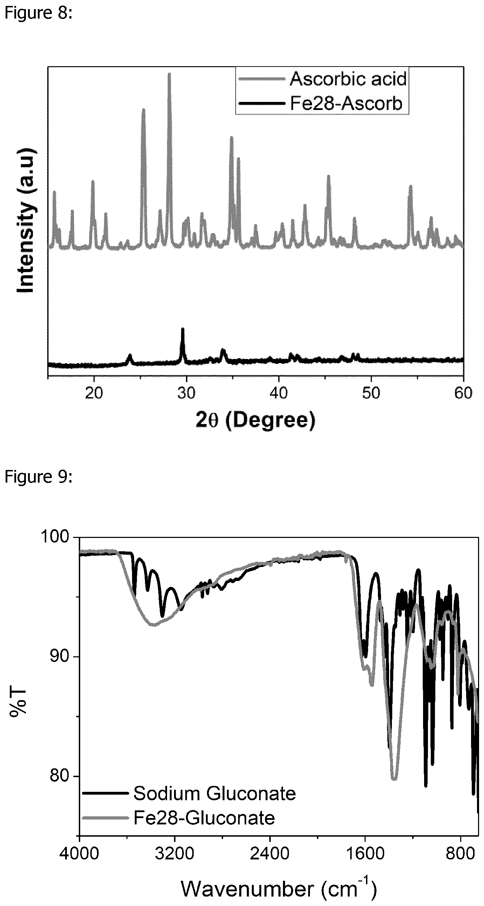

Figure 8 shows PXRD pattern of Fe₂₈-Ascorb (in black, bottom) and ascorbic acid (in grey, top). A comparative analysis of diffractograms shows that ascorbic acid has a distinctive crystal structure confirmed by a large number of high-intensity peaks at specific positions (Fig 7). The lack of pronounced peaks in the diffractogram of Fe₂₈-Ascorb indicates the low crystallinity nature of the product.

Figure 9 shows FTIR spectra of Sodium gluconate (in grey) and Fe₂₈-Gluco (in black). In the FTIR spectra, we can identify a broad band with a centroid at 3300 cm ¹, attributed to stretching vibrations of hydroxyl groups (Fig 8). The bands of deformation vibrations of OH groups in the plane and out-of-plane appear at 1400 cm⁻¹. We can identify the bands corresponding to the asymmetric vibration of the carboxylate (COO⁻) at 1630 cm⁻¹. The Fe-O stretch band is visible in the fingerprint region from 650 to 700 cm⁻¹ (Fig 9).

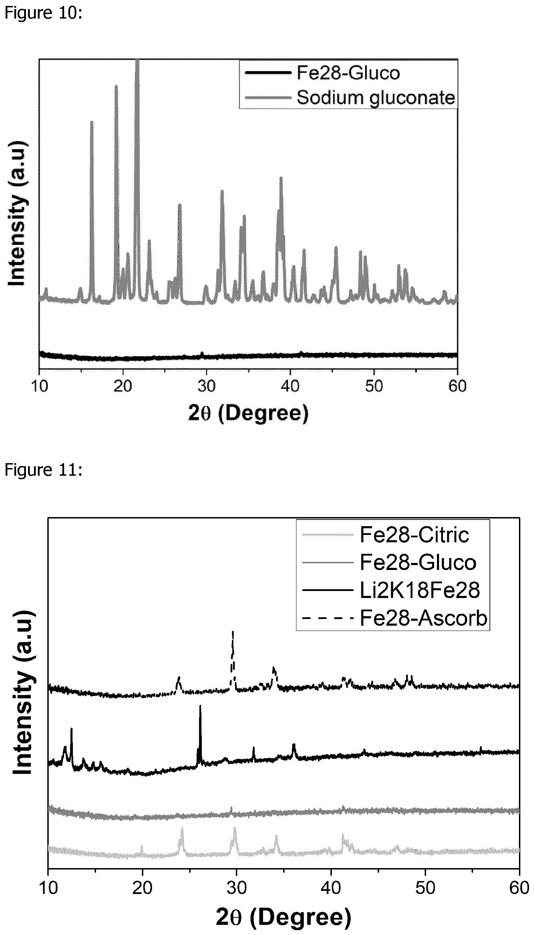

Figure 10 shows PXRD pattern of Fezs-Gluco (in black, bottom) and sodium gluconate (in grey, top). A comparative analysis of diffractograms shows that sodium gluconate has a distinctive crystal structure confirmed by a large number of high-intensity peaks at specific positions (Fig. 10). The absence of pronounced peaks in the diffractogram Fe₂₈-Gluco indicates that the material is amorphous.

Figure 11 shows PXRD pattern of Fezs clusters with acid linkers compared to Li₂K₂₀Fe₂₈. A comparative analysis of diffractograms shows that all clusters (except Fe₂₈-Gluco) have a similar diffraction pattern. The lack of pronounced peaks in the diffractogram of Fe₂₈-Gluco indicates the low crystallinity nature of the product.

### Examples

### Examples 1-6: General Synthetic procedure (GP):

Fe(NO₃)₃ 9 HzO (64 g, 0.1584 mol) is dissolved in a mixture of acetate buffer (0.6 L, pH = 4.5) and water (0.14 L) (solution A).

Gd(NO₃)₃.6H₂O (5.45 g 0.0120 mol) and dicarboxylic acid (0.0938 mol) are dissolved in a heated (100 °C) solution of acetate buffer (0.6 L, pH = 4.5) and water (0.14 L) (solution B).

Solution B is added to solution A, and a 2M solution of M₂CO₃ (0.12 L, M = Li⁺, Na⁺, and K⁺) is slowly added. After the reaction is allowed to mix, the solution is refluxed for 12 h. After the reaction time, the solution is filtered.

Crystals are obtained by reduction of the volume to 1/3 and left to crystalize at 1 °C overnight. The product is obtained by filtration. Yield 70 %.

Six different clusters were synthesized to show the influence of the selected cation on the solubility. The clusters are the following:
- Li₂₀[Fe₂₈(µ₃-O)8(tart)₁₆(OAc)₂₄] ×H₂O **(Li₂₀Fe₂₈)**
- K₂₀[Fe₂₈(µ₃-O)₈(tart)₁₆(OAc)₂₄] ×H₂O **(K₂₀Fe₂₈)**
- Na₂₀[Fe₂₈(µ₃-O)₈(tart)₁₆(OAc)₂₄] ×H₂O **(Na₂₀Fe₂₈)**
- Li₂Na₁₈[Fe₂₈(µ₃-O)₈(tart)₁₆(OAc)₂₄] ×H₂O **(Li₂Na₁₈Fe₂₈)**
- Li₂K₁₈[Fe₂₈(µ₃-O)₈(tart)₁₆(OAc)₂₄] ×H₂O **(Li₂K₁₈Fe₂₈)**
- K₂Li₁₈[Fe₂₈(µ₃-O)₈(tart)₁₆(OAc)₂₄] ×H₂O **(K₂Li₂₈Fe₂₈)**

### Example 7 - Solubility studies

Solubility was determined by the shake-flask method (table 1) at room temperature (25 °C, pH = 5.7 in 0.3 M of Na₂SO₄). A clear trend can be observed as shown by the results in Table 1: the smaller the cation, the higher the cluster solubility.

**Table 1: Solubility of M₂N₁₈[Fe₂₈(µ₃-O)₈(tart)₁₆(OAc)₂₄] ×H₂O (M, N = Li, Na, K).**

| Chemical Structure | Solubility (mM) |
|---|---|
| K₂₀[Fe₂₈(µ₃-O)₈(tart)₁₆(OAc)₂₄] ×H₂O **(K₂₀Fe₂₈)** | 50 |
| Na₂₀[Fe₂₈(µ₃-O)₈(tart)₁₆(OAc)₂₄] ×H₂O **(Na₂₀Fe₂₈)** | 70 |
| Li₂Na₁₈[Fe₂₈(µ₃-O)₈(tart)₁₆(OAc)₂₄] ×H₂O **(Li₂Na₁₈Fe₂₈)** | 83 |
| Li₂K₁₈[Fe₂₈(µ₃-O)₈(tart)₁₆(OAc)₂₄] ×H₂O **(Li₂K₁₈Fe₂₈)** | 48 |
| K₂Li₁₈[Fe₂₈(µ₃-O)₈(tart)₁₆(OAc)₂₄] ×H₂O **(K₂Li₂₈Fe₂₈)** | 88 |

**Table 2: Solubility test of Fe₂₈ clusters.**

| Cluster | Solubility (mM) |
|---|---|
| Fe₂₈ | 84 |
| Fe₂₈-Citric | 33 |
| Fe₂₈-Ascorb | 0.4 |
| Fe₂₈-Gluco | 0.2 |
| | |

| Fe₂₈+Tartaric acid | Solubility (mM) |
|---|---|
| Fe₂₈ | 84 |
| Ba₁₀[Fe₂₈(µ₃-O)₈(tart)₁₆(OAc)₂₄] ×H₂O (Ba₁₀Fe₂₈) | 84 |
| Ca₁₀[Fe₂₈(µ₃-O)₈(tart)₁₆(OAc)₂₄] ×H₂O (Ca₁₀Fe₂₈) | 2 |
| Mq₁₀[Fe₂₈(µ₃-O)₈(tart)₁₆(OAc)₂₄] ×H₂O (Mg₁₀Fe₂₈) | 1 |

### Example 8 - Base modification

By modifying the synthesis procedure, i.e. by employing Ba(OH)₂ or Ca(OH)₂ as a base the following clusters can be obtained:
- Ba₁₀[Fe₂₈(µ₃-O)₈(tart)₁₆(OA_{C})₂₄] ×H₂O (Ba₁₀Fe₂₈)
- Ca₁₀[Fe₂₈(µ₃-O)₈(tart)₁₆(OAc)₂₄] ×H₂O (Ca₁₀Fe₂₈)

FTIR was employed to confirm the identities of the products. One can identify the bands corresponding to the C=O stretch at 1653 cm⁻¹ in the FTIR spectra. Other significant bands are the stretching of O-H at 3440 cm⁻¹ and the Fe-O stretch from 650 to 700 cm⁻¹ (Fig 2). All spectra of the novel clusters synthesized as shown in Figure 2 are identical and match known structural features of clusters in the literature.

## Claims

1. Cluster compound comprising
an ion, and
a plurality of counterions,
the ion comprising metal atoms M and one or more types of ligands,
wherein
each of the metal atoms M is independently selected from the group consisting of Mn, Fe, Co, Cr, V, Cu, Ni, and Zn,
the ligand comprises two or more carboxyl groups; **characterized in that**
A) the ligand comprises a substituted or unsubstituted linear hydrocarbon chain having three or more carbon atoms linearly bound between at least two of the two or more carboxy groups; or
B) the ligand comprises a substituted or unsubstituted linear hydrocarbon chain having two carbon atoms between at least two of the two or more carboxy groups and wherein the hydrocarbon chain comprises one or more of an amino group, a further carboxy group, and a sulfate group; or
C) the ligand is a lactone comprising two or more hydroxy groups.

2. Cluster compound according to claim 1, wherein the substituted or unsubstituted linear hydrocarbon chain has the general formula YOOC-[CR'₂]ₙ-COOY or YOOC-CR"₂-[CR'₂]ₘ-CR"₂-COOY, wherein
n is 3 or more,
m is 1 or more,
R' is independently selected from the group consisting of H, OH, NH₂, COOY, SO₃Y, alkyl, alkene, an ether group, and an ester group, preferred H, OH, and COOY,
R" is independently selected from the group consisting of H, OH, NH₂, COOY, SO₃Y, alkyl, alkene, an ether group, and an ester group, preferred H, OH, and COOY,
Y is a charge, preferred a negative charge, or hydrogen.

3. Cluster compound according to claim 2, wherein the substituted or unsubstituted linear hydrocarbon chain has a general formula selected from the group consisting of YOOC-[CH₂]ₙ-COOY, YOOC-[COH₂]ₙ-COOY, YOOC-[CHOH]ₙ-COOY, YOOC-[CHNH₂]ₙ-COOY, YOOC-[CH₂]ₙ₋₁[CHNH₂]₁-COOY, and YOOC-[CH₂]ₙ₋₁-[CHCOOH]-COOY.

4. Cluster compound according any one of claims 1 to 3, wherein each of the metal atoms M is Mn, Fe or a mixture thereof.

5. Cluster compound according to any one of claims 1 to 4, comprising 12 to 42 metal atoms M, 16 to 36 metal atoms M, 24 to 32 metal atoms M, 26 to 30 metal atoms M, or 28 metal atoms M.

6. Cluster compound according to any one of claims 1 to 5, wherein the two or more carboxyl groups are terminal carboxyl groups, and/or wherein the ligand consists of a substituted or unsubstituted linear hydrocarbon chain between at least two of the two or more carboxy groups, or wherein the ligand consists of a substituted or unsubstituted branched hydrocarbon chain between at least two of the two or more carboxy groups.

7. Cluster compound according to any one of claims 1 to 6,
wherein the substituted or unsubstituted linear hydrocarbon chain comprises from 3 to 24, from 3 to 18, from 3 to 12, from 3 to 8, from 3 to 6, or 3 carbon atoms, or
wherein the linear hydrocarbon chain comprises from 2 to 24, from 2 to 18, from 2 to 12, from 2 to 8, from 2 to 6, or 2 carbon atoms.

8. Cluster compound according to any one of claims 1 to 7, wherein the one or more types of ligands are independently selected from the group consisting of citric acid, mucic acid, ascorbic acid, and anions thereof.

9. Cluster compound according to any one of claims 1 to 8, wherein the cluster compound, preferred the ion, comprises four sub-units, wherein each of the sub-units comprises preferred 7 metal atoms M, preferred in the form of a pol-yoxometallate, optionally
wherein the ligands are coordinated to three or four metal atoms M.

10. Cluster compound according to any one of claims 1 to 9, wherein the metal atoms M of the sub-units are coordinated octahedrally, preferred coordinated octahedrally by oxygen atoms of the ligand, optionally
wherein the ligand has a tetradentate coordination to three of the metal atoms M, or wherein the ligand has a hexadentate coordination to four of the metal atoms M derived from two different sub-units.

11. Cluster compound according to any one of claims 1 to 10, wherein the ion is a polyanion, preferred having the general formula M₈₋₃₀(µ₃-O)₂₋₁₂(A)₅₋₂₈(CH₃COO)₅₋₃₀^{y-}, further preferred M₂₈(µ₃-O)₈(A)₁₆(CH₃COO)₂₄]²⁰⁻, wherein M is metal atom M, A is an organic acid or anion selected from citric acid, mucic acid, and ascorbic acid, and combinations thereof, wherein y is from 6 to 32and/or wherein the cluster compound has the general formula M₃₋₂₈[Fe₈₋₃₀(µ₃-O)₂₋₁₂(A)₅₋₂₈(CH₃COO)₅₋₃₀] • xH₂O, wherein x is from 6 to 32, and/or
the cluster compound further comprising an oligosaccharide, preferred further comprising a cyclic oligosaccharide, preferred further comprising cyclodextrin.

12. Electrolyte solution comprising a cluster compound as defined in any one of claims 1 to 11 or a salt thereof in a concentration ranging from 0.01 to 5 M, preferred ranging from 0.1 to 2 M, further preferred from 0.5 to 1.5 M.

13. Electrolyte solution according to claim 12, wherein the solution has a pH value ranging from 2 to 10, preferred ranging from 3 to 8, further preferred ranging from 4 to 6, and/or wherein the solution has a viscosity of from 1 mPa/s to 2 mPa/s, preferred of from 1.6 mPa/s to 1.9 mPa/s, measured at 25 °C using Ostwald viscometer.

14. Use of the cluster compound according to any one of claims 1 to 11 or of the electrolyte solution according to claim 13 or 14 in a redox flow battery, photocatalysis or medical applications.

15. Redox flow battery comprising the cluster compound according to any one of claims 1 to 11 or the electrolyte solution according to claim 13 or 14.
